# EUROPEAN PATENT SPECIFICATION

(11) **EP 3 992 240 B1**
(45) Date of publication and mention of the grant of the patent: **06.08.2025**
(21) Application number: 20830867.6
(22) Date of filing: 22.06.2020
(51) Int. Cl.: C08L 21/00, C08L 23/26, C08L 77/02, C08L 77/06, C08J 9/04, C08L 63/00, C08K 3/013, B29C 44/04, B29K 77/00, B29K 105/04, C08J 9/00, C08J 9/12, C08J 9/34

(54) **POLYAMIDE RESIN COMPOSITION FOR FOAM MOLDING AND FOAM MOLDED BODY**
POLYAMIDHARZZUSAMMENSETZUNG ZUM SCHAUMFORMEN UND SCHAUMFORMKÖRPER
COMPOSITION DE RÉSINE POLYAMIDE DESTINÉE AU MOULAGE DE MOUSSE, ET CORPS MOULÉ EN MOUSSE

(30) Priority: 28.06.2019 JP 2019120949
(43) Date of publication of application: 04.05.2022
(73) Proprietor: TOYOBO MC Corporation, Osaka-shi, Osaka 5300001 (JP)
(72) Inventor: IWAMURA, Kazuki, Otsushi, Shiga 5200292 (JP); YOSHIMURA, Nobuhiro, Otsushi, Shiga 5200292 (JP); UMEKI, Ryo, Otsushi, Shiga 5200292 (JP)
(74) Representative: Müller-Boré & Partner Patentanwälte PartG mbB
(86) International application number: PCT/JP2020/024439
(87) International publication number: WO 2020/262314

(56) References cited:
- EP-A1- 2 636 703
- WO-A1-2012/060392
- JP-A- 2007 297 581
- JP-A- 2012 111 940
- US-A1- 2014 142 219

## Description

### TECHNICAL FIELD

The present invention relates to a polyamide resin composition for foam molding, and relates to a polyamide resin composition capable of providing a lightweight foam molded body having high load resistance, high impact resistance, and good appearance properties.

### BACKGROUND ART

As a method for producing a polyamide resin foam molded body, a method using a chemical foaming agent has been generally known. A chemical foaming method is a method in which a raw material resin and an organic foaming agent that is decomposed by heating to generate gas are mixed, and the mixture is then heated to a temperature equal to or higher than the decomposition temperature of the foaming agent to perform foam molding. For example, in Patent Document 1, a polyamide terpolymer is used, and a polyamide foam molded body having a specific gravity of 1.2 is obtained by a chemical foaming agent. However, this polyamide foam body has a low foam ratio, and cannot sufficiently satisfy weight reduction.

As a method for producing a polyamide resin foam molded body other than methods using a chemical foaming agent, Patent Document 2 proposes a method in which a polyamide molded body is made to absorb carbon dioxide beforehand, and then heated in a post step, thereby obtaining a polyamide resin foam molded body having a foam ratio of 2. However, it cannot be said that the polyamide foam molded body obtained by this method is also sufficiently reduced in weight after all. Moreover, the method has a disadvantage that the method is complicated and low in productivity because a molding step and a foaming step are substantially separate steps.

Furthermore, Patent Document 3 discloses a method for producing a foamed polyamide molded body by dissolving a supercritical fluid of nitrogen or carbon dioxide in a molten resin, followed by injection molding. However, this method also provides a foam ratio as low as 1.25, and therefore cannot achieve sufficient weight reduction.

Meanwhile, Patent Document 4 discloses a method for obtaining a foam molded body having a fine average cell diameter using a polystyrene resin, but the method has a disadvantage of lacking versatility because not only a common injection molding machine but also a specially designed injection plunger and a specially designed injection apparatus are separately required in order to obtain a foam molded body of interest. Moreover, the foam molded body reported in this document is only one prepared by using a polystyrene resin which can be foam-molded relatively easily even in an existing foam molding method. Even if this method is applied to a polyamide resin which is hardly foam-molded, it is actually impossible to easily obtain a desired foam molded body.

Furthermore, Patent Document 5 proposes a method in which when a molten resin charged into a mold reaches a certain viscoelastic state during a cooling process, a core-side mold is moved in a mold opening direction and simultaneously a critical inert gas is directly injected into the resin in the mold, so that a foam molded body is obtained. However, it is difficult to form uniform foam cells by this method because a crystalline polyamide having a high solidification rate can maintain a proper viscoelastic state in a short period of time.

Patent Document 6 is proposed in view of the above, and proposes that a specific glycidyl group-containing styrene-based copolymer may be contained at a predetermined ratio together with a polyamide resin in order to control the solidification rate of a polyamide resin composition to satisfactorily increase an effect of alleviating deformation in a linear-nonlinear region during melting. The use of the polyamide resin composition containing such a specific glycidyl group-containing styrene-based copolymer as a raw material for injection molding is confirmed to provide a foam molded body having excellent heat resistance, sufficiently reduced in weight, and having high load resistance. However, the method in Patent Document 6 has a problem in appearance performance of the surface of the molded body.

### PRIOR ART DOCUMENTS

### PATENT DOCUMENTS

Patent Document 1: JP-A-2009-249549
Patent Document 2: JP-A-2006-35687
Patent Document 3: JP-A-2005-126545
Patent Document 4: JP-A-2006-69215
Patent Document 5: JP-A-2006-212945
Patent Document 6: JP-B-05263370

### SUMMARY OF THE INVENTION

### PROBLEMS TO BE SOLVED BY THE INVENTION

According to the study by the present inventors, the present inventors have found that the method in Patent Document 6 has a problem in the appearance performance of the surface of the molded body, in particular, a new problem that appearance defects such as occurrence of swirl marks due to the presence of gas contained in the resin, and a whitish surface in the case of a black molded body causes a lowered glossiness. Patent documents EP 2 636 703 A1 and JP 2012 111940 A relate to polyamide compositions for foam molding comprising a crystalline polyamide, a non-crystalline polyamide, a glycidyl group-containing styrene copolymer and an inorganic reinforcing material. However, the disclosed foam molded bodies have decreased load resistance. The present invention has been made in view of the above circumstances, and an object of the present invention is to provide a polyamide resin composition for a foam molded body having high appearance performance, high load resistance, and high impact resistance.

### MEANS FOR SOLVING THE PROBLEMS

As a result of intensive studies to achieve the above object, the present inventors have found that the solidification rate of a polyamide resin composition is controlled, and the polyamide resin composition contains an elastomer component, to provide the polyamide resin composition having a viscosity suitable for foam molding, high appearance performance, high load resistance, and high impact resistance. The present invention has been completed based on these findings.

That is, the present invention has the following configurations.

(1) A polyamide resin composition for foam molding containing: 40 to 70 parts by mass of a crystalline polyamide resin (A); 5 to 15 parts by mass of a non-crystalline polyamide resin (B); 15 to 50 parts by mass of an inorganic reinforcing material (C); 0.1 to 10 parts by mass of an elastomer (D); and 0.5 to 15 parts by mass of a copolymer (E) having a functional group that reacts with a terminal group of the polyamide resin, wherein a total amount of the crystalline polyamide resin (A), the non-crystalline polyamide resin (B), the inorganic reinforcing material (C), the elastomer (D), and the copolymer (E) having a functional group that reacts with a terminal group of the polyamide resin is 100 parts by mass.
(2) The polyamide resin composition for foam molding according to (1), wherein: the crystalline polyamide resin (A) is polyamide 6; and the non-crystalline polyamide resin (B) is polyamide 6I/6T.
(3) The polyamide resin composition for foam molding according to (1) or (2), wherein: the elastomer (D) is an acid-modified α-olefin-based (co)polymer; and the copolymer (E) having a functional group that reacts with a terminal group of the polyamide resin is a glycidyl group-containing styrene-based copolymer.
(4) The polyamide resin composition for foam molding according to any one of (1) to (3), wherein the polyamide resin composition has a crystallization temperature during cooling of lower than 190°C.
(5) The polyamide resin composition for foam molding according to any one of (1) to (4), wherein: the polyamide resin composition has a melt viscosity of 550 Pa·s or more at a shear rate of 60.8 sec⁻¹ at a temperature of 260°C; and
   the polyamide resin composition has a melt viscosity of 300 Pa·s or less at a shear rate of 608 sec⁻¹ at a temperature of 260°C.
(6) A foam molded body containing the polyamide resin composition for foam molding according to any one of (1) to (5) as a constituent component.
(7) A foam molded body having a sandwich structure in which a foam layer including a continuous resin phase and independent foam cells having an average cell diameter of 10 to 300 µm, and non-foam skin layers provided on both surfaces of the foam layer and each having a thickness of 200 to 500 µm are provided, wherein: the continuous resin phase of the foam layer and the non-foam skin layer are composed of the polyamide resin composition for foam molding according to any one of (1) to (5); and the foam molded body has a glossiness of 80 or more, measured from a side of the non-foam skin layer.

### EFFECT OF THE INVENTION

The present invention makes it possible to provide a polyamide resin composition capable of providing a foam molded body having excellent heat resistance, sufficiently reduced in weight, and having high load resistance according to a simple molding method, and a polyamide resin foam molded body using the same. Such a polyamide resin foam molded body has a uniform foam structure with a high foam ratio, has both excellent lightweight properties and load resistance, and has appearance performance with a good glossiness in the case of a black molded body. Accordingly, the polyamide resin foam molded body can be suitably used as resin functional components having high required characteristics and design components required to have functionality in applications such as automobile components and home electric appliance components.

### MODE FOR CARRYING OUT THE INVENTION

Hereinafter, a polyamide resin composition of the present invention and a foam molded body using the same will be described in detail.

### (Polyamide resin composition)

The polyamide resin composition of the present invention is a polyamide resin composition suitable for foam molding, and contains a crystalline polyamide resin (A), a non-crystalline polyamide resin (B), an inorganic reinforcing material (C), an elastomer (D), and a copolymer (E) having a functional group that reacts with a terminal group of the polyamide resin. Unless otherwise specified, the content (blending amount) of each component in the polyamide resin composition of the present invention is represented by an amount based on 100 parts by mass of the total of the crystalline polyamide resin (A), the non-crystalline polyamide resin (B), the inorganic reinforcing material (C), the elastomer (D), and the copolymer (E) having a functional group that reacts with a terminal group of the polyamide resin. In the polyamide resin composition of the present invention, the blending amount of each component is directly the content of the component in the polyamide resin composition.

In the present invention, as for the crystallinity/non-crystallinity of the polyamide resin, when the polyamide resin is subjected to DSC measurement at a heating rate of 20°C/min in accordance with JIS K 7121: 2012, a polyamide resin showing a clear melting point peak is defined as crystallinity, and a polyamide resin not showing a clear melting point peak is defined as non-crystallinity.

### (Crystalline polyamide resin (A))

The crystalline polyamide resin (A) used in the present invention is obtained by using lactam, ω-aminocarboxylic acid, dicarboxylic acid, and diamine and the like as raw materials. The crystalline polyamide resin (A) is a polyamide resin obtained by the polycondensation of such an amine component and acid component, or a copolymer or blend thereof.

Specifically, examples of the amine component constituting the crystalline polyamide resin (A) include aliphatic diamines such as 1,2-ethylenediamine, 1,3-trimethylenediamine, 1,4-tetramethylenediamine, 1,5-pentamethylenediamine, 2-methyl-1,5-pentamethylenediamine, 1,6-hexamethylenediamine, 1,7-heptamethylenediamine, 1,8-octamethylenediamine, 1,9-nonamethylenediamine, 2-methyl-1,8-octamethylenediamine, 1,10-decamethylenediamine, 1,11-undecamethylenediamine, 1,12-dodecamethylenediamine, 1,13-tridecamethylenediamine, 1,16-hexadecamethylenediamine, 1,18-octadecamethylenediamine, 2,2,4 (or 2,4,4)-trimethylhexamethylenediamine; alicyclic diamines such as piperazine, cyclohexanediamine, bis(3-methyl-4-aminohexyl)methane, bis-(4,4'-aminocyclohexyl)methane, and isophoronediamine; aromatic diamines such as meta-xylylenediamine, para-xylylenediamine, para-phenylenediamine, and meta-phenylenediamine, and hydrogenated products thereof.

Examples of the acid component constituting the crystalline polyamide resin (A) include a polycarboxylic acid and an acid anhydride. Examples of the polycarboxylic acid include aromatic dicarboxylic acids such as terephthalic acid, isophthalic acid, orthophthalic acid, 1,5-naphthalenedicarboxylic acid, 2,6-naphthalenedicarboxylic acid, 4,4'-biphenyldicarboxylic acid, 2,2'-diphenyldicarboxylic acid, 4,4'-diphenyl ether dicarboxylic acid, sodium 5-sulfonate isophthalic acid, and 5-hydroxyisophthalic acid; and aliphatic and alicyclic dicarboxylic acids such as fumaric acid, maleic acid, succinic acid, itaconic acid, adipic acid, azelaic acid, sebacic acid, 1,11-undecanedioic acid, 1,12-dodecanedioic acid, 1,14-tetradecanedioic acid, 1,18-octadecanedioic acid, 1,4-cyclohexanedicarboxylic acid, 1,3-cyclohexanedicarboxylic acid, 1,2-cyclohexanedicarboxylic acid, 4-methyl-1,2-cyclohexanedicarboxylic acid, and dimer acid.

Examples of the component constituting the crystalline polyamide resin (A) include lactams such as ε-caprolactam, aminocarboxylic acids, undecanoic lactams, or lauryl lactams which are ring-opened structures of these components, and 11-aminoundecanoic acid and 12-aminododecanoic acid which are ring-opened structures of these components.

Examples of the polyamide resin (A) polymerized from these components include polyamides such as polycaproamide (polyamide 6), polyundecamide (polyamide 11), polylauramide (polyamide 12), polytetramethylene adipamide (polyamide 46), polyhexamethylene adipamide (polyamide 66), polyundecamethylene adipamide (polyamide 116), polymethaxylylene adipamide (polyamide MXD6), polyparaxylylene adipamide (polyamide PXD6), polytetramethylene sebacamide (polyamide 410), polyhexamethylene sebacamide (polyamide 610), polydecamethylene adipamide (polyamide 106), polydecamethylene sebacamide (polyamide 1010), polyhexamethylene dodecamide (polyamide 612), polydecamethylene dodecamide (polyamide 1012), polyhexamethylene isophthalamide (polyamide 6I), polytetramethylene terephthalamide (polyamide 4T), polypentamethylene terephthalamide (polyamide 5T), poly-2-methylpentamethylene terephthalamide (polyamide M-5T), polyhexamethylene terephthalamide (polyamide 6T), polyhexamethylene hexahydroterephthalamide (polyamide 6T(H)), polynonamethylene terephthalamide (polyamide 9T), polyundecamethylene terephthalamide (polyamide 11T), polydodecamethylene terephthalamide (polyamide 12T), polyhexamethylene terephthalamide-polyhexamethylene isophthalamide (polyamide 6T6I), polybis(3-methyl-4-aminohexyl)methane terephthalamide (polyamide PACMT), polybis(3-methyl-4-aminocyclohexyl)methane isophthalamide (polyamide PACM·I), polybis(3-methyl-4-aminocyclohexyl)methane dodecamide (polyamide PACM12), and polybis(3-methyl-4-aminocyclohexyl)methane tetradecamide (polyamide PACM14), as well as copolymers of these polyamides and/or blend compositions thereof.

The crystalline polyamide resin (A) is preferably polyamide 6 and/or polyamide 66 depending on demand characteristics required for automobile applications and home electric appliance applications and the like, and resin molding conditions, and more preferably polyamide 6 depending on the magnitude of an effect of controlling a crystallization rate by the non-crystalline polyamide resin described later.

The relative viscosity (RV) of the crystalline polyamide resin (A) measured at 20°C in 96% concentrated sulfuric acid is not particularly limited, but is preferably 0.4 to 4.0, more preferably 1.0 to 3.5, and still more preferably 1.5 to 3.0. Examples of the method for setting the relative viscosity of the crystalline polyamide resin within a certain range include means for adjusting a molecular weight.

The content (blending amount) of the crystalline polyamide resin (A) is 40 to 70 parts by mass, and preferably 50 to 70 parts by mass. When the content of the crystalline polyamide resin (A) is within this range, the temperature and speed of an injection molding machine, and a mold temperature are set to secure good moldability even if components other than the polyamide resin are contained.

### (Non-crystalline polyamide resin (B))

The non-crystalline polyamide resin (B) is preferably a semi-aromatic polyamide resin having a glass transition temperature of 120°C or higher and 200°C or lower. If the glass transition temperature is lower than 120°C, heat resistance may be insufficient, and if the glass transition temperature exceeds 200°C, a solidification temperature is too high, which makes it difficult to apply a foaming method for expanding a mold described later.

The non-crystalline semi-aromatic polyamide resin will be described. The polyamide resin is a semi-aromatic non-crystalline polyamide resin containing an aromatic component in either a diamine component or a dicarboxylic acid component. Examples of the dicarboxylic acid include terephthalic acid, isophthalic acid, adipic acid, and sebacic acid, and examples of the diamine include tetramethylenediamine, hexamethylenediamine, meta-xylylenediamine, para-xylylenediamine, undecamethylenediamine, dodecamethylenediamine, 2-methylpentamethylenediamine, trimethylhexamethylenediamine, aminoethylpiperazine, and bisaminomethylcyclohexane. Among these, polyamide 6I/6T containing isophthalic acid, terephthalic acid, and adipic acid as raw materials is preferably used for controlling the crystallization rate, that is, the solidification rate of the polyamide resin composition described later.

The relative viscosity (RV) of the non-crystalline polyamide resin (B) measured at 20°C in 96% concentrated sulfuric acid is not particularly limited, but is preferably 1.8 to 2.4.

The content (blending amount) of the non-crystalline polyamide resin (B) is 5 to 15 parts by mass, and preferably 7 to 13 parts by mass. When the content of the non-crystalline polyamide resin (B) is within this range, good moldability can be secured, and an optimum crystallization rate decreasing effect can be derived.

The acid value and amine value of each of the crystalline polyamide resin (A) and the non-crystalline polyamide resin (B) are preferably 0 to 200 equivalent/1 × 10⁶ g, and more preferably 0 to 100 equivalent/1 × 10⁶ g. When a terminal functional group exceeds 200 equivalent/1 × 10⁶ g, not only gelation and deterioration are apt to occur during melt retention, but also problems such as coloring and hydrolysis may be caused even under a use environment. In particular, when a reactive compound such as a glass fiber or a maleic acid-modified polyolefin is compounded, it is preferable to set the acid value and/or the amine value to 5 to 100 equivalent/1 × 10⁶ g in accordance with the reactivity and the reactive group.

### (Inorganic reinforcing material (C))

The inorganic reinforcing material (C) used in the present invention most effectively improves physical properties such as strength, rigidity, and heat resistance. Specific examples thereof include fibrous materials composed of a glass fiber, a carbon fiber, an aramid fiber, an alumina fiber, a silicon carbide fiber, and a zirconia fiber and the like, whiskers composed of aluminum borate and potassium titanate and the like, needle-like wollastonite, and a milled fiber. In addition to these, fillers such as a glass bead, a glass flake, a glass balloon, silica, talc, kaolin, wollastonite, mica, alumina, hydrotalcite, montmorillonite, graphite, a carbon nanotube, fullerene, zinc oxide, indium oxide, tin oxide, iron oxide, titanium oxide, magnesium oxide, aluminum hydroxide, magnesium hydroxide, red phosphorus, calcium carbonate, potassium titanate, lead zirconate titanate, barium titanate, aluminum nitride, boron nitride, zinc borate, aluminum borate, barium sulfate, magnesium sulfate, and layered silicate subjected to an organic treatment for the purpose of delamination can also be used as the inorganic reinforcing material (C). Among these, a glass fiber and a carbon fiber and the like are preferably used, and a glass fiber is particularly preferable. These inorganic reinforcing materials (C) may be used singly or in combination of two or more kinds thereof.

For example, as the glass fiber, a chopped strand cut to a fiber length of about 1 to 20 mm can be preferably used. The cross-sectional shape of the glass fiber that can be used is a circular cross-sectional shape or a non-circular cross-sectional shape. The glass fiber having a non-circular cross section also includes those having a substantially elliptical shape, a substantially oval shape, and a substantially cocoon shape in a cross section perpendicular to the length direction of a fiber length, and in this case, the ovality of the glass fiber is preferably 1.5 to 8. Here, the ovality is a ratio of a major axis to a minor axis. The major axis is a length of a long side of a rectangle having a minimum area and circumscribing a cross section perpendicular to the longitudinal direction of a glass fiber, and the minor axis is a length of a short side of the rectangle. The thickness of the glass fiber is not particularly limited, but the minor axis is about 1 to 20 µm, and the major axis is about 2 to 100 µm.

In order to improve the affinity with the crystalline polyamide resin (A), the inorganic reinforcing material (C) is preferably treated in advance with a coupling agent such as an organosilane-based compound, an organotitanium-based compound, an organoborane-based compound, or an epoxy-based compound. Particularly preferably, the inorganic reinforcing material (C) is likely to react with a carboxylic acid group and/or a carboxylic acid anhydride group. As the coupling agent, any of a silane-based coupling agent, a titanate-based coupling agent, and an aluminum-based coupling agent and the like may be used. Among these, a silane-based coupling agent such as an aminosilane coupling agent or an epoxysilane coupling agent is particularly preferable. For example, a polyamide resin composition containing a glass fiber treated with a coupling agent is preferable because the polyamide resin composition provides a molded article having excellent mechanical characteristics and appearance characteristics. The treatment with the coupling agent is preferably performed in advance, but a coupling agent may be added later for use.

The content (blending amount) of the inorganic reinforcing material (C) is 15 to 50 parts by mass, preferably 15 to 40 parts by mass, and more preferably 18 to 35 parts by mass. The content of the inorganic reinforcing material (C) is within this range, whereby a reinforcing effect on the resin can be produced even when a general-purpose glass fiber is used. A temperature and an injection speed during injection molding, and a mold temperature are set, whereby good molding conditions can be secured.

### (Elastomer (D))

In the present invention, the elastomer (D) is used for promoting the thickening effect of the polyamide resin composition. When the viscosity of the polyamide resin composition is not appropriate, the presence of gas contained in the resin causes breakage of the foam cells or appearance defects such as swirl marks in the surface of the molded article, which may cause a deteriorated glossiness. As the elastomer (D), known elastomers such as an olefin-based elastomer, a styrene-based elastomer, an ester-based elastomer, an amide-based elastomer, and a urethane-based elastomer can be used. Among these, an olefin-based polymer (acid-modified polyolefin) having a carboxylic acid group and/or a carboxylic acid anhydride group is preferable. The acid-modified polyolefin is an α-olefin (co)polymer in which a monomer having a carboxylic acid group and/or a carboxylic acid anhydride group is bonded to a molecular chain of an unmodified polyolefin by copolymerization or graft polymerization or the like.

Examples of the unmodified polyolefin that can be used in obtaining the olefin-based polymer described above include, in addition to homopolymers such as polyethylene, polypropylene, polybutene-1, polypentene-1, and polymethylpentene, polyolefins obtained by radically polymerizing at least one of α-olefins such as ethylene, propylene, butene-1, pentene-1,4-methylpentene-1, hexene-1, octene-1, and isobutylene, and non-conjugated dienes such as 1,4-hexadiene, dicyclopentadiene, 2,5-norbornadiene, 5-ethylidene norbornene, 5-ethyl-2,5-norbornadiene, and 5-(1'-propenyl)-2-norbornene using an ordinary metal catalyst or a metallocene-based high-performance catalyst or the like. Specific examples thereof include an ethylene/propylene copolymer, an ethylene/butene-1 copolymer, an ethylene/hexene-1 copolymer, an ethylene/propylene/dicyclopentadiene copolymer, an ethylene/propylene/5-ethylidene-2-norbornene copolymer, unhydrogenated or hydrogenated polybutadiene, an unhydrogenated or hydrogenated styrene/isoprene/styrene triblock copolymer, and an unhydrogenated or hydrogenated styrene/butadiene/styrene triblock copolymer. Among these, examples of the diene-based elastomer include thermoplastic zhomopolymers or copolymers which are A-B type or A-B-A' type block copolymerized elastic bodies composed of a vinyl-based aromatic hydrocarbon and a conjugated diene, wherein the end blocks A and A' may be the same or different and the aromatic moiety is derived from a vinyl aromatic hydrocarbon that may be monocyclic or polycyclic. Examples of the vinyl-based aromatic hydrocarbon include styrene, α-methylstyrene, vinyltoluene, vinylxylene, ethylvinylxylene, vinylnaphthalene, and mixtures thereof. The intermediate polymer block B is composed of a conjugated diene-based hydrocarbon, and examples thereof include polymers derived from 1,3-butadiene, 2,3-dimethylbutadiene, isoprene, 1,3-pentadiene, and mixtures thereof. Hydrogenated polymers may be also used as the intermediate polymer block B of the block copolymer.

A method for introducing a carboxylic acid group and/or a carboxylic anhydride group into an unmodified polyolefin is not particularly limited, and methods such as copolymerization and graft introduction into the unmodified polyolefin using a radical initiator can be used. In the case of copolymerization, the amount of the functional group-containing component introduced is preferably within the range of 0.1 to 20 mol%, and more preferably 0.5 to 12 mol% with respect to the entire olefin monomers in the modified polyolefin. In the case of grafting, the amount is preferably within the range of 0.1 to 10% by mass, and more preferably 0.5 to 6% by mass with respect to the mass of the modified polyolefin. If the amount of the functional group-containing component introduced is excessively small, an effect of promoting the reaction of the copolymer (E) having a functional group that reacts with a terminal group of the polyamide resin described later may not be sufficiently obtained, or impact resistance may not be sufficiently imparted, whereas if the amount is excessively large, the stability of the melt viscosity may be impaired.

The elastomer (D) is preferably an acid-modified α-olefin-based (co)polymer. Here, the "(co)polymer" represents a polymer or a copolymer. The α-olefin-based copolymer also contains a styrene-based copolymer (styrene-based elastomer) obtained by copolymerizing α-olefin. Specific examples thereof include maleic acid anhydride-modified polyethylene, maleic acid anhydride-modified polypropylene, an ethylene/acrylic acid copolymer, an ethylene/methacrylic acid copolymer, ones wherein a part of or all of the carboxylic acid moiety/moieties in the above copolymer is/are made into a salt with sodium, lithium, potassium, zinc or calcium, an ethylene/methyl acrylate copolymer, an ethylene/ethyl acrylate copolymer, an ethylene/methyl methacrylate copolymer, an ethylene/ethyl methacrylate copolymer, an ethylene/ethyl acrylate-g-maleic acid anhydride copolymer (here, "-g-" stands for graft; hereinafter, it stands for the same), an ethylene/methyl methacrylate-g-maleic acid anhydride copolymer, an ethylene/propylene-g-maleic acid anhydride copolymer, an ethylene/butene-1-g-maleic acid anhydride copolymer, an ethylene/propylene/1,4-hexadiene-g-maleic acid anhydride copolymer, an ethylene/propylene/dicyclopentadiene-g-maleic acid anhydride copolymer, an ethylene/propylene/2,5-norbornadiene-g-maleic acid anhydride copolymer, a hydrogenated styrene/butadiene/styrene-g-maleic acid anhydride copolymer, and a hydrogenated styrene/isoprene/styrene-g-maleic acid anhydride copolymer. Among these, an ethylene/butene-1-g- maleic acid anhydride copolymer or a hydrogenated styrene/butadiene/styrene-g-maleic acid anhydride copolymer is preferable because of the effect of promoting the thickening of the polyamide resin composition, and an ethylene/butene-1-g-maleic acid anhydride copolymer is more preferable from the viewpoint of fluidity during injection molding.

The content (blending amount) of the elastomer (D) is 0.1 to 10 parts by mass, preferably 0.5 to 5 parts by mass, and more preferably 0.5 to 3 parts by mass. When the amount of the elastomer (D) is less than 0.1 parts by mass, impact resistance is not excellent, and a required melt viscosity cannot be achieved. In contrast, when the elastomer (D) is contained in an amount exceeding 10 parts by mass, a viscosity in a high shear region increases, which causes a problem in moldability.

### (Copolymer (E) having functional group that reacts with terminal group of polyamide resin)

As the copolymer (E) having a functional group that reacts with a terminal group of the polyamide resin (hereinafter, may be abbreviated as copolymer (E)) used in the present invention, various copolymers having a functional group that reacts with a terminal group of the polyamide resin, and being different from the elastomer (D) can be used. Examples of the functional group that reacts with a terminal group of the polyamide resin include a glycidyl group (epoxy group), a carboxyl group, a hydroxy group, and an amino group, and among these, a glycidyl group (epoxy group) is preferable. In the present invention, the copolymer (E) is contained to increase the molecular weight, thereby exhibiting an effect of increasing an extensional melt viscosity, and therefore a processing condition administration width can be extended. As a result, it is possible to achieve the intended purpose of obtaining a foam molded body having excellent lightweight properties and load resistance as well as heat resistance.

As the copolymer (E), a glycidyl group-containing styrene-based copolymer is preferably used. The glycidyl group-containing styrene-based copolymer to be used may be, for example, one obtained by polymerizing a monomer mixture containing a vinyl aromatic monomer (X), a glycidylalkyl (meth)acrylate (Y), and if necessary, a vinyl group-containing monomer having no epoxy groups other than the (X) (Z) (hereinafter, referred to as "other vinyl group-containing monomer").

Examples of the vinyl aromatic monomer (X) include styrene and α-methylstyrene. Examples of the glycidyl alkyl (meth)acrylate (Y) include glycidyl (meth)acrylate, a (meth)acrylic acid ester having a cyclohexene oxide structure, and a (meth)acrylic glycidyl ether, and among these, glycidyl (meth)acrylate is preferable in terms of high reactivity. Examples of the other vinyl group-containing monomer (Z) include alkyl (meth)acrylates having an alkyl group with 1 to 22 carbon atoms (the alkyl group may be either a linear chain or a branched chain) such as methyl (meth)acrylate, ethyl (meth)acrylate, propyl (meth)acrylate, butyl (meth)acrylate, 2-ethylhexyl (meth)acrylate, cyclohexyl (meth)acrylate, stearyl (meth)acrylate, and methoxyethyl (meth)acrylate, a polyalkylene glycol (meth)acrylate, an alkoxyalkyl (meth)acrylate, a hydroxyalkyl (meth)acrylate, a dialkylaminoalkyl (meth)acrylate, a benzyl (meth)acrylate, a phenoxyalkyl (meth)acrylate, an isobornyl (meth)acrylate, and an alkoxysilylalkyl (meth)acrylate. Vinyl esters such as (meth)acrylamide, (meth)acryldialkylamide, and vinyl acetate, vinyl ethers, aromatic vinyl monomers such as (meth)allyl ethers, α-olefin monomers such as ethylene and propylene, and the like can be also used as the other vinyl group-containing monomer.

The copolymer (E) is preferably a copolymer composed of 20 to 99% by mass of the vinyl aromatic monomer (X), 1 to 80% by mass of the glycidylalkyl (meth)acrylate (Y), and 0 to 79% by mass of the other vinyl group-containing monomer (Z). The copolymer (E) is more preferably a copolymer composed of 20 to 99% by mass of the (X), 1 to 80% by mass of the (Y), and 0 to 40% by mass of the (Z), and still more preferably a copolymer composed of 25 to 90% by mass of the (X), 10 to 75% by mass of the (Y), and 0 to 35% by mass of the (Z). Preferably, each of the compositions is suitably controlled to the range described above because the composition has an influence on a functional-group concentration that contributes to the reaction with the crystalline polyamide resin (A) and/or the non-crystalline polyamide resin (B).

Specific examples of the copolymer (E) include a styrene/methyl methacrylate/glycidyl methacrylate copolymer, and bisphenol A-type, cresol novolak-type, and phenol novolak-type epoxy-based compounds. The copolymers (E) may be used singly, or can be, of course, used as a mixture of two or more kinds thereof.

It is important that the copolymer (E) contains two or more glycidyl groups per molecule as a functional group capable of reacting with an amino group or a carboxyl group of the polyamide resin. This makes it possible to promptly introduce crosslinking partly into the whole resin, and causes the amino group or the carboxyl group of the polyamide resin to react with a functional group of the copolymer (E) during melt extrusion, so that the polyamide resin and the copolymer (E) are converted partly into a crosslinked product, whereby an effect of improving an extensional melt viscosity can be obtained.

The copolymer (E) preferably has a weight average molecular weight of 4000 to 25000 in order to adjustably control the extensional melt viscosity. The weight average molecular weight is more preferably 5000 to 15000, and still more preferably 6000 to 10000. If the weight average molecular weight of the copolymer (E) is less than 4000, an unreacted glycidyl group-containing styrene-based copolymer may volatilize in a molding step or bleed out of the surface of a molded article, leading to deterioration in the adhesiveness of a product, or pollution of the surface. Furthermore, burnt wastes are formed due to an excess reaction of the copolymers (E), which leads to a decrease in productivity during kneading and deterioration in the quality of a final product. Meanwhile, if the weight average molecular weight of the copolymer (E) exceeds 25,000, the effect of maintaining the molecular weight may be reduced due to the delay of the reaction during kneading extrusion, and durability such as heat resistance, possessed inherently by the polyamide resin is more likely to be reduced due to deterioration in the compatibility of the copolymer (E) with the polyamide resin.

The content (blending amount) of the copolymer (E) is 0.5 to 15 parts by mass. The content is more preferably 0.5 to 5 parts by mass. If the content is less than 0.5 parts by mass, the effect of thickening cannot be sufficiently obtained, whereby the foam cells are not uniform. If the content exceeds 15 parts by mass, the thickening effect becomes excessive, which causes difficult molding, whereby a foam molded article having a good appearance cannot be obtained.

### (Other components)

The polyamide resin composition of the present invention may contain, in addition to the above-described components, various additives conventionally used in the polyamide resin. Examples of the additive include a stabilizer, an impact improver, a flame retardant, a release agent, a sliding improver, a coloring agent, a plasticizer, and a crystal nucleating agent. As the additive, a hydrotalcite-based compound may also be used for the purpose of preventing metal corrosion of a mold or the like. The additives may be used singly or in combination of two or more kinds thereof.

Examples of the stabilizer include hindered phenol-based antioxidants, sulfur-based antioxidants, phosphorus-based antioxidants, organic antioxidants and heat stabilizers such as a phosphite compound and a thioether-based compound, hindered amine-based, benzophenone-based, and imidazole-based light stabilizers and UV absorbers, and metal deactivators. As one of the heat stabilizers, a copper compound is useful because the copper compound can prevent effective long-term thermal aging under a high temperature environment of 120°C or higher. Furthermore, this copper compound is preferably used in combination with an alkali metal halide compound. When the stabilizer is contained, the content thereof is preferably 0 to 5 parts by mass. In particular, when the stabilizer is a copper compound, the content thereof is preferably 0.005 to 0.5 parts by mass, and more preferably 0.01 to 0.5 parts by mass.

The flame retardant is not particularly limited, but for example, a combination of a halogen-based flame retardant and an antimony compound is preferable. A non-halogen-based flame retardant may also be used as the flame retardant, and specific examples thereof include melamine cyanurate, red phosphorus, a metal salt of phosphinic acid, and a nitrogen-containing phosphoric acid-based compound. Particularly preferred is a combination of a phosphinic acid metal salt and a nitrogen-containing phosphoric acid-based compound (including, for example, melamine as well as a reaction product of condensate of melamine such as melam or melon with polyphosphoric acid or a mixture thereof). When the flame retardant is contained, the content thereof is preferably 1 to 50 parts by mass, more preferably 1 to 40 parts by mass, and still more preferably 1 to 30 parts by mass.

Examples of the release agent include a long-chain fatty acid or an ester and metal salt thereof, an amide-based compound, polyethylene wax, silicon, and polyethylene oxide. The long-chain fatty acid is particularly preferably one having 12 or more carbon atoms, and examples thereof include stearic acid, 12-hydroxystearic acid, behenic acid, and montanic acid. These may be esterified with monoglycol or polyglycol or may form a metal salt partially or entirely at all carboxylic acids. Examples of the amide-based compound include ethylene bisterephthalamide and methylene bisstearylamide. The release agents may be used singly or in combination of two or more kinds thereof. When the release agent is contained, the content thereof is preferably 0.1 to 5 parts by mass.

The polyamide resin composition of the present invention may contain another thermoplastic resin other than the crystalline polyamide resin (A) and the non-crystalline polyamide resin (B) as long as the effect of the present invention is not impaired. Examples of the thermoplastic resin include polyphenylene sulfide (PPS), a liquid crystal polymer (LCP), an aramid resin, polyether ether ketone (PEEK), polyetherketone (PEK), polyetherimide (PEI), thermoplastic polyimide, polyamideimide (PAI), polyetherketoneketone (PEKK), polyphenylene ether (PPE), polyethersulfone (PES), polysulfone (PSU), polyarylate (PAR), polyethylene terephthalate, polybutylene terephthalate, polyethylene naphthalate, polybutylene naphthalate, polycarbonate (PC), polyoxymethylene (POM), polypropylene (PP), polyethylene (PE), polymethylpentene (TPX), polystyrene (PS), polymethyl methacrylate, an acrylonitrile-styrene copolymer (AS), and an acrylonitrile-butadiene-styrene copolymer (ABS). When the other thermoplastic resins are less compatible with the crystalline polyamide resin (A) and the non-crystalline polyamide resin (B), a reactive compound or a compatibilizer such as a block polymer may be added or the other thermoplastic resins may be modified (particularly, acid modification is preferable) as necessary. The other thermoplastic resins may be blended in a molten state by melt kneading, or the other thermoplastic resins may be molded into a fibrous or particulate form, and then dispersed in the crystalline polyamide resin (A) and the non-crystalline polyamide resin (B). When the other thermoplastic resins are contained, the content thereof is preferably 1 to 50 parts by mass, more preferably 1 to 35 parts by mass, and still more preferably 1 to 20 parts by mass.

In the polyamide resin composition of the present invention, a compound or polymer or the like having a substituent that reacts with the amino group or carboxyl group of the crystalline polyamide resin (A) and the non-crystalline polyamide resin (B) may be used as any of the above-described optional components to introduce such a reactive substituent, thereby increasing the degree of crosslinking. Examples of the reactive substituent include functional groups such as a glycidyl group, a carboxyl group, a carboxylic acid metal salt, an ester group, a hydroxyl group, an amino group, and a carbodiimide group, and a functional group capable of undergoing ring-open addition with a polyester terminal of lactone, lactide, or lactam or the like. Among these, a glycidyl group or a carbodiimide group is preferable from the viewpoint of the reaction speed. Such substituents may be used singly or in combination of two or more kinds thereof, and different kinds of functional groups may be possessed in one molecule. When the reactive substituent is introduced, the introduction amount thereof is preferably set so that a gel or the like is not generated by a high degree of crosslinking.

In the polyamide resin composition of the present invention, the total content of the crystalline polyamide resin (A), the non-crystalline polyamide resin (B), the inorganic reinforcing material (C), the elastomer (D), and the copolymer (E) having a functional group that reacts with a terminal group of the polyamide resin is preferably 70% by mass or more, more preferably 80% by mass or more, still more preferably 90% by mass or more, and particularly preferably 95% by mass or more.

### (Method for producing polyamide resin composition)

In the polyamide resin composition of the present invention, the reaction of the copolymer (E) that reacts with the terminal group of the polyamide resin produces relatively loose crosslinking which does not result in gelation, or a branched structure. Therefore, an effect of molecular entanglement can be enhanced in the molten state of the polyamide resin composition. It is considered that this reaction product not only increases the melt viscosity but also exhibits an effect of delaying relaxation behavior in a wide shear rate region as a long-time relaxation component when a strain is applied in a molten state. Specifically, while depending on the kinds and amounts of the polyamide resin, copolymer (E), inorganic reinforcing material (C), and elastomer (D), the content of each of the components (A) to (E) shown in the present invention is preferably set, and compound conditions such as an extruder screw configuration, temperature setting, a screw rotation speed, and an extrusion amount per unit time with which a sufficiently high shear stress can be applied to a matrix composition for a time required for the reaction between the polyamide resin and the copolymer (E) may be selected.

In preparing the polyamide resin composition of the present invention, a method for mixing the crystalline polyamide resin (A), the non-crystalline polyamide resin (B), the inorganic reinforcing material (C), the elastomer (D), the copolymer (E), and the other optional components is not particularly limited. For example, a single screw extruder, a twin screw extruder, a pressure kneader, and a Banbury mixer and the like can be used. Among these, a twin screw extruder is particularly preferably used. The operating conditions and the like of the twin screw extruder differ depending on various factors such as the type of the polyamide resin, and the type and amount of each of the components, and are not unambiguously determined. For example, the operating temperature may be set at the melting point of the polyamide resin (generally about 270 to 320°C) + about 25°C. It may be considered that the operation time is 10 minutes or less, for example, 1 minute to several minutes to cause the melt viscosity to sufficiently reach a desired value. In the screw configuration of the extruder, kneading discs having excellent kneading are preferably incorporated at several positions.

### (Characteristics of polyamide resin composition)

The polyamide resin composition of the present invention thus obtained has high viscosity stability in its molten state, and has melt rheological properties particularly suitable for foam molding.

Regarding the melt viscosity of the polyamide resin composition of the present invention, the melt viscosity at a shear rate of 60.8 sec⁻¹ at a temperature of 260°C is 550 Pa·s or more, and the melt viscosity at a shear rate of 608 sec⁻¹ at a temperature of 260°C is 300 Pa·s or less. When the melt viscosity at a shear rate of 60.8 sec⁻¹ is less than 550 Pa·s, cells are highly likely to be broken during foam molding, and when the melt viscosity at a shear rate of 608 sec⁻¹ is higher than 300 Pa·s, the viscosity becomes too high, which causes a problem in moldability. The upper limit of the melt viscosity at a shear rate of 60.8 sec⁻¹ is preferably 1200 Pa·s, more preferably 1000 Pa·s, and still more preferably 750 Pa·s. The lower limit of the melt viscosity at a shear rate of 608 sec⁻¹ is preferably 200 Pa·s.

The crystallization temperature during cooling of the polyamide resin composition of the present invention is lower than 190°C. Controlling the solidification rate of the polyamide resin composition refers to a decrease in a crystallization rate. The effect of decreasing the crystallization rate can be evaluated by a crystallization temperature during cooling (Tc2) measured with a differential scanning calorimeter (DSC). In Patent Document 6, the temperature of the polyamide resin composition is preferably 200°C or lower, and particularly preferably 190°C or lower, but for further improving the appearance of a foam molded article, it is important that the temperature is lower than 190°C. The temperature is preferably 180°C or higher and lower than 190°C. When the temperature is lower than 180°C, crystallization takes time, which is more likely to cause molding defects.

### (Foam molded body)

The foam molded body of the present invention is obtained by using the polyamide resin composition of the present invention described above. The foam molded body of the present invention includes a non-foam skin layer present in a surface layer and a foam layer present in an inner layer. Since the non-foam skin layer and the foam layer are formed of the polyamide resin composition of the present invention described above, they have a foam structure with a uniform cell state, and can exhibit excellent lightweight properties and load resistance.

The foam layer is composed of a continuous resin phase and independent foam cells. Here, the foam cells have an average cell diameter of 10 to 100 µm in the case of physical foaming and 10 to 300 µm in the case of chemical foaming. The continuous resin phase means a portion formed of a cured polyamide resin composition and having no cavities. Regarding the diameter of the foam cells (cell diameter), characteristics differing from each other are exhibited both in the case where the cell diameter is small and in the case where the cell diameter is large as long as the foam cells are uniform and have no variation in cell diameter and therefore both the cases are useful. For example, when the average cell diameter is smaller, higher rigidity can be exhibited for the same weight, whereas when the average cell diameter is larger, cushioning properties and appropriate energy absorption properties in breakage can be obtained. However, since a foam structure having an average cell diameter equal to or larger than the thickness of the non-foam skin layer is disadvantageous in terms of load resistance, the average cell diameter of the foam cells is preferably less than the thickness of the non-foam skin layer. Specifically, in the case of physical foaming, the average cell diameter is preferably 10 to 100 µm, and more preferably 20 to 90 µm, as described above. When the average cell diameter is less than 10 µm, the internal pressure of the molded body is low, and the pressure at the time of forming the non-foam skin layer is insufficient, whereby deteriorated appearance such as sink marks may be formed. In contrast, this may be a result of prevention of cells from growing due to external pressure, but this case is not preferable because a low specific gravity structure of interest may not be obtained due to excessive suppression of cell growth. Meanwhile, when the average cell diameter exceeds 100 µm, load resistance is low, and the reinforcing effect of the inorganic reinforcing material (C) having a scale of several µm to several hundreds µm can hardly be expected, which is not preferable. When the average cell diameter is within the above range, appropriate pressure can be applied to the non-foam skin layer from the inside of the molded body, and molding can be performed with external pressure that does not inhibit the growth of cells.

Preferably, the non-foam skin layer is laminated on the foam layer, and has a thickness of 200 to 500 µm. When the thickness of the non-foam skin layer is less than 200 µm, a good appearance tends not to be obtained. Meanwhile, when the thickness exceeds 500 µm, the specific gravity of the foam layer is too low, whereby a foam structure having a specific gravity of 0.2 to 1.0 may not be obtained in a uniform cell state as the whole foam molded body. More preferably, the thickness of the non-foam skin layer is 200 to 400 µm, and still more preferably 250 to 400 µm.

The foam molded body of the present invention usually has a sandwich structure in which the non-foam skin layer is provided on each of both surfaces of the foam layer (in other words, a structure in which the foam layer is sandwiched between the non-foam skin layers from both sides). The size of the foam molded body is not particularly limited, but the size in the thickness direction of the sandwich structure is assumed to be about 1 to 30 mm.

The specific gravity of the foam molded body of the present invention is preferably 0.2 to 1.0. Since the specific gravities of general non-reinforced polyamide and inorganic-reinforced polyamide are about 1.0 to 1.8, the foam molded body of the present invention can be said to be sufficiently reduced in weight. More preferably, the specific gravity is 0.3 to 0.9. When the specific gravity is less than 0.2, the mechanical characteristics of a load-resistant structure tend to be too low, and when the specific gravity exceeds 1.0, sufficient weight reduction cannot be said to be achieved.

The surface appearance of the foam molded body of the present invention is very good, and when a glossiness at an incident angle of 85 degrees is measured on the surface of the foam molded body in accordance with JIS Z-8714, the surface of the foam molded body can have a glossiness of 80 or more (the higher the numerical value is, the better the glossiness is).

### (Method for producing foam molded body)

The foaming agent that can be used in obtaining the foam molded body of the present invention is one to be added, as a gas component that serves as a foam nucleus or as a source of the gas component, into a resin that is melted in a resin melting zone of a molding machine.

Specifically, examples of chemical foaming agents that can be used include inorganic compounds such as ammonium carbonate and sodium bicarbonate; and organic compounds such as an azo compound, a sulfohydrazide compound, a nitroso compound, and an azide compound. Examples of the azo compound include azodicarbonamide (ADCA), 2,2-azoisobutyronitrile, azohexahydrobenzonitrile, and diazoaminobenzene, and among these, ADCA is preferably utilized. Examples of the sulfohydrazide compound include benzenesulfohydrazide, benzene-1,3-disulfohydrazide, diphenylsulfone-3,3-disulfonehydrazide, and diphenyloxide-4,4-disulfonehydrazide. Examples of the nitroso compound include N,N-dinitrosopentaethylene tetramine (DNPT) and N,N-dimethylterephthalate. Examples of the azide compound include terephthalazide and p-tertiarybutylbenzazide.

When a chemical foaming agent is used as the foaming agent, the chemical foaming agent can also be used as a foaming agent masterbatch containing, as a base material, a thermoplastic resin having a melting point lower than the decomposition temperature of the chemical foaming agent in order to uniformly disperse the chemical foaming agent in the polyamide resin (A). The thermoplastic resin that serves as the base material is not particularly limited as long as the thermoplastic resin has a melting point lower than the decomposition temperature of the chemical foaming agent, and examples thereof include polystyrene (PS), polyethylene (PE), and polypropylene (PP). In this case, regarding the blending ratio of the chemical foaming agent and the thermoplastic resin, the amount of the chemical foaming agent is preferably 10 to 100 parts by mass with respect to 100 parts by mass of the thermoplastic resin. When the amount of the chemical foaming agent is less than 10 parts by mass, the amount of a masterbatch to be mixed with the polyamide resin (A) is excessively large, which may cause deterioration in physical properties. When the amount of the chemical foaming agent exceeds 100 parts by mass, it becomes difficult to form a masterbatch due to the problem regarding the dispersibility of the chemical foaming agent.

When supercritical carbon dioxide and/or supercritical nitrogen is used as the foaming agent, the amount thereof is preferably 0.05 to 30 parts by mass, and more preferably 0.1 to 20 parts by mass with respect to 100 parts by mass of the resin components in the polyamide resin composition. When the amount of the supercritical carbon dioxide and/or supercritical nitrogen is less than 0.05 parts by mass, uniform fine foam cells are less likely to be obtained. When the amount exceeds 30 parts by mass, the appearance of the surface of the molded body tends to be impaired.

The supercritical carbon dioxide or supercritical nitrogen to be used as the foaming agent may be used alone, but carbon dioxide and nitrogen may be used in admixture. Nitrogen tends to be suitable for forming finer cells in polyamide. Carbon dioxide is suitable for obtaining a higher foam ratio because carbon dioxide allows a relatively larger injection amount of gas. Therefore, the supercritical carbon dioxide and/or supercritical nitrogen may be optionally mixed depending on the state of a foam structure. The mixing ratio of carbon dioxide and nitrogen to be mixed is preferably within the range of 1:9 to 9:1 in terms of molar ratio.

In order to inject the molten polyamide resin composition into the cavity together with the foaming agent, the molten polyamide resin composition and the foaming agent may be mixed in the injection molding machine. In particular, in the case of using supercritical carbon dioxide and/or nitrogen as the foaming agent, for example, a method in which gaseous carbon dioxide and/or nitrogen is injected into an injection molding machine from a gas cylinder directly or with pressurization by a pressure booster pump, and a method in which liquid carbon dioxide and/or nitrogen is injected into an injection molding machine with a plunger pump can be adopted. Such carbon dioxide and/or nitrogen needs to be in a supercritical state in the molding machine from the viewpoint of solubility, permeability, and diffusibility thereof in a molten polyamide resin composition.

The "supercritical state" as used herein refers to a state where in the course of raising the temperature and pressure of a substance having a gas phase and a liquid phase, the distinction between the gas phase and the liquid phase can be eliminated in a certain temperature region and a certain pressure region. The temperature and the pressure at this time are respectively referred to as critical temperature and critical pressure. That is, since a substance simultaneously has properties of both gas and liquid in a supercritical state, a fluid generated in this state is referred to as critical fluid. Such a critical fluid has a larger density than that of gas and a smaller viscosity than that of liquid, whereby the critical fluid has a property of extremely easily diffusing in a substance. Incidentally, carbon dioxide has a critical temperature of 31.2°C and a critical pressure of 7.38 MPa, and nitrogen has a critical temperature of 52.2°C and a critical pressure of 3.4 MPa. They will fall into their supercritical states and behave as critical fluids at or above the critical temperatures and the supercritical pressures.

### EXAMPLES

Hereinafter, the present invention will be more specifically described with reference to Examples, but the present invention is not limited thereto.

Measured values disclosed in Examples are values measured by the following methods.

### <Surface appearance: visual observation>

The surface appearance (non-foam skin layer side) of an obtained foam molded body was confirmed. When gas floating patterns were not visually confirmed on the surface, this was evaluated as "good". When gas floating patterns were confirmed on the surface, this was evaluated as "poor".

### <Surface appearance: glossiness>

In accordance with JIS Z-8714, a glossiness was measured at an incident angle of 85 degrees on the surface (non-foam skin layer side) of the obtained foam molded body.

### <Average cell diameter, uniformity of cells>

First, a sample for cross section observation was obtained by embedding a molded body in a visible light-curable resin, and then grinding the resultant to expose a foam cross section, or by immersing, in liquid nitrogen for 10 minutes, a molded body prepared by forming a notch beforehand such that a foam cross section is exposed on breakage, and then exposing a foam cross section by impact breakage.

Regarding the average cell diameter, a photograph of the foam cross section of the sample for cross section observation taken with a scanning electron microscope was image processed. The equivalent circle diameters of at least 100 adjacent cells were defined as cell diameters, and the average value of the 100 cell diameters was obtained. This operation was carried out at any three points, and the average of the three average values obtained at the three points was defined as an average cell diameter.

Regarding the uniformity of cells, a photograph of the foam cross section of the sample for cross section observation taken with a scanning electron microscope was image processed. At any three points each being a square of 500 µm to 2000 µm on each side and containing at least 20 adjacent cells, when the average cell diameter was 300 µm or less and there was no voids having a length continuity of 600 µm or more, this was evaluated as "good" and other conditions were evaluated as "poor".

### <Thickness of skin layer>

A sample for cross section observation was obtained by embedding a molded body in a visible light-curable resin, and then grinding the resultant to expose a foam cross section, or by immersing, in liquid nitrogen for 10 minutes, a molded body prepared by forming a notch beforehand such that a foam cross section is exposed on breakage, and then exposing a foam cross section by impact breakage. A photograph of the foam cross section of the sample for cross section observation taken with a scanning electron microscope was image processed, and the thickness of an integrated non-foam layer found at a surface layer portion was measured as the thickness of a skin layer.

### <Crystallization temperature>

5 mg of a sample (polyamide resin composition) dried at 105°C for 15 hours under reduced pressure was weighed into an aluminum pan ("PN 900793.901" manufactured by TA Instruments), sealed with an aluminum lid ("PN 900794.901" manufactured by TA Instruments), then heated from room temperature to 265°C at a rate of 20°C/minute using a differential scanning calorimeter ("DSC Q100" manufactured by TA Instruments), and then cooled to room temperature at 20°C/minute. An exothermic peak temperature at this time was defined as a crystallization temperature (Tc2).

### <Melt viscosity>

Using a capillary flow tester, melt viscosities were measured at a temperature of 260°C and a shear rate of 60.8 sec⁻¹, and at a temperature of 260°C and a shear rate of 608 sec⁻¹. A capillary used had a length of 10 mm and a diameter of 1 mm.

The following raw materials were used in each of Examples and Comparative Examples.
<Crystalline polyamide resin (A)>
   Polyamide 6; "TP-4208" manufactured by Shenma, relative viscosity: 2.6
<Non-crystalline polyamide resin (B)>
   Polyamide 6I/6T; "Grivory G21" manufactured by EMS, relative viscosity: 2.1
<Inorganic reinforcing material (C)>
   Glass fiber; "CS3PE453" manufactured by Nitto Boseki Co., Ltd.

### <Elastomer (D)>

Maleic anhydride-modified ethylene·α-olefin-based copolymer; "MH5020" manufactured by Mitsui Chemicals, Inc., α-olefin: butene-1, acid anhydride group content: 100 µmol/g

Maleic anhydride-modified ethylene·α-olefin-based copolymer; "MH7020" manufactured by Mitsui Chemicals, Inc., α-olefin: butene-1, acid anhydride group content: 100 µmol/g

Maleic anhydride-modified styrene copolymer; "M1943" manufactured by Asahi Kasei Corporation, styrene/ethylene·butylene ratio = 20/80, acid value: 10 mg CH₃ONa/g

### <Copolymer (E) having functional group that reacts with terminal group of polyamide resin>

Glycidyl group-containing styrene-based copolymer; ARUFON "UG4050" manufactured by Toagosei Co., Ltd., styrene/glycidyl acrylate copolymer

### <Other additives>

Stabilizer: "SONGNOX2450" manufactured by Songwon International Japan K.K.
Release agent: "montanic acid ester wax WE40" manufactured by Clariant Japan K.K.
Black pigment: "EX3236" manufactured by Nippon Pigment Company Limited

### (Examples 1 to 9, Comparative Examples 1 to 6)

The blending amounts (parts by mass) of the raw materials (A) to (E) described above were as shown in Table 1. Regarding the blending amounts of the other additives, in each of Examples and Comparative Examples, the amount of the stabilizer was set to 0.3 parts by mass; the amount of the release agent was set to 0.3 parts by mass; and the amount of the black pigment was set to 1.0 parts by mass. These materials were mixed with a 35 φ twin screw extruder (manufactured by Toshiba Machine Co., Ltd.). Specifically, first, raw materials other than the inorganic reinforcing material (C) were simultaneously charged from a hopper at a screw rotation speed of 100 rpm, followed by melt-kneading, and the inorganic reinforcing material (C) was then charged by a side feed. At this time, the cylinder temperature was set to 250°C. A strand discharged from the extruder was cooled in a water tank, and then pelletized by a strand cutter, followed by drying at 125°C for 5 hours, to obtain a polyamide resin composition in the form of pellets.

Next, a foam molded body was produced by the mold expansion method described above using the polyamide resin composition obtained as described above. There was used, as a mold, a mold for flat plate production composed of a stationary mold and a mobile mold capable of forming a cavity having a width of 50 mm, a length of 150 mm, and a thickness of 2 mm when being closed. Specifically, supercritical nitrogen was injected in an amount of 0.2 parts by mass relative to 100 parts by mass of the resin components in the polyamide resin composition in a plasticizing region of an electric injection molding machine having a mold clamping force of 1800 kN, a screw diameter of 42 mm, and a screw with L/D of 30. After injecting and charging into the mold, the surface temperature of which was controlled at 40 to 60°C (an optimum condition was selected therebetween), the mobile mold was moved to a mold opening direction by a length provided as an amount of core retraction of 3 mm to enlarge the capacity of the cavity, thereby obtaining a foam molded body. At this time, the delay time from the completion of injection to the start of core retraction was set to 0 to 0.5 seconds (an optimum condition was selected therebetween). The movement speed of the mobile mold (core retraction speed) was set to any speed within the range of 2 to 10 mm/second (an optimum condition was selected therebetween) for core retraction distances of 0 mm to 0.5 mm, and also to any speed within the range of 0.5 to 5 mm/second (an optimum condition was selected therebetween) for core retraction distances of 0.5 mm to 3 mm. A test piece of 25 mm × 25 mm × thickness having cut faces on four sides was cut out of the obtained foam molded body, and the specific gravity thereof was measured according to the method for measuring the specific gravity of solid described in JIS-Z8807. As a result, the specific gravity was within the range of 0.5 to 0.9 in each of Examples and Comparative Examples.

The evaluation results of the polyamide resin compositions and foam molded bodies obtained in Example 1 to 9 and Comparative Example 1 to 6 are shown in Table 1.

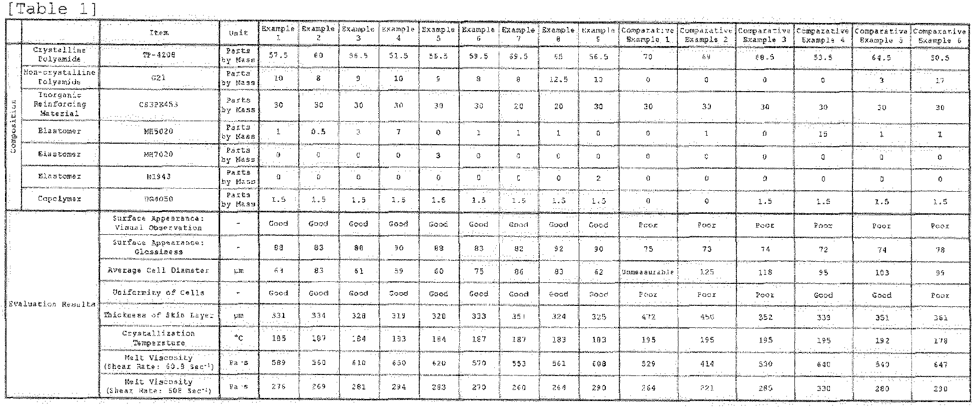

From Table 1, it can be seen that Examples 1 to 9 have a good surface appearance and good uniformity of cells, and are excellent as a polyamide resin composition for foam molding. Meanwhile, in Comparative Example 1 to 3, the surface appearance and the uniformity of the cells were not good. In Comparative Example 4, the surface appearance was not good. In Comparative Example 5, the uniformity of the cells was not good. In Comparative Example 6, the crystallization was not completed because the crystallization temperature was too low, whereby the surface appearance was not good, and any of evaluation items was poor as compared with Examples.

### INDUSTRIAL APPLICABILITY

The present invention makes it possible to provide a polyamide resin composition capable of providing a foam molded body having excellent heat resistance, sufficiently reduced in weight, and having high load resistance according to a simple molding method, and a foam molded body containing the same, having a uniform foam structure with a high foam ratio, having both excellent lightweight properties and load resistance, and having excellent appearance performance, whereby the present invention can be expected to largely contribute to applications such as automobile components and home electric appliance components.

## Claims

1. A polyamide resin composition for foam molding comprising:
40 to 70 parts by mass of a crystalline polyamide resin (A);
5 to 15 parts by mass of a non-crystalline polyamide resin (B);
15 to 50 parts by mass of an inorganic reinforcing material (C);
0.1 to 10 parts by mass of an elastomer (D); and
0.5 to 15 parts by mass of a copolymer (E) having a functional group that reacts with a terminal group of the polyamide resin,
wherein a total amount of the crystalline polyamide resin (A), the non-crystalline polyamide resin (B), the inorganic reinforcing material (C), the elastomer (D), and the copolymer (E) having a functional group that reacts with a terminal group of the polyamide resin is 100 parts by mass.

2. The polyamide resin composition for foam molding according to claim 1, wherein:
the crystalline polyamide resin (A) is polyamide 6; and
the non-crystalline polyamide resin (B) is polyamide 6I/6T.

3. The polyamide resin composition for foam molding according to claim 1 or 2, wherein:
the elastomer (D) is an acid-modified α-olefin-based (co)polymer; and
the copolymer (E) having a functional group that reacts with a terminal group of the polyamide resin is a glycidyl group-containing styrene-based copolymer.

4. The polyamide resin composition for foam molding according to any one of claims 1 to 3, wherein the polyamide resin composition has a crystallization temperature during cooling of lower than 190°C, and wherein the crystallization temperature is determined as defined in the description.

5. The polyamide resin composition for foam molding according to any one of claims 1 to 4,
wherein:
the polyamide resin composition has a melt viscosity of 550 Pa·s or more at a shear rate of 60.8 sec⁻¹ at a temperature of 260°C; and
the polyamide resin composition has a melt viscosity of 300 Pa·s or less at a shear rate of 608 sec⁻¹ at a temperature of 260°C.

6. A foam molded body comprising the polyamide resin composition for foam molding according to any one of claims 1 to 5 as a constituent component.

7. The foam molded body according to claim 6, wherein:
the foam molded body has a sandwich structure in which a foam layer including a continuous resin phase and independent foam cells having an average cell diameter of 10 to 300 µm, and non-foam skin layers provided on both surfaces of the foam layer and each having a thickness of 200 to 500 µm are provided,
wherein:
the continuous resin phase of the foam layer and the non-foam skin layer are composed of the polyamide resin composition for foam molding; and
the foam molded body has a glossiness of 80 or more, measured from a side of the non-foam skin layer,
wherein the average cell diameter and the glossiness are determined as defined in the description.

## Patentansprüche

1. Polyamidharzzusammensetzung zum Schaumformen, umfassend:
40 bis 70 Masseteile von einem kristallinen Polyamidharz (A);
5 bis 15 Masseteile von einem nichtkristallinen Polyamidharz (B);
15 bis 50 Masseteile von einem anorganischen Verstärkungsmaterial (C);
0,1 bis 10 Masseteile von einem Elastomer (D); und
0,5 bis 15 Masseteile von einem Copolymer (E) mit einer funktionellen Gruppe, die mit einer Endgruppe des Polyamidharzes reagiert,
wobei die Gesamtmenge des kristallinen Polyamidharzes (A), des nichtkristallinen Polyamidharzes (B), des anorganischen Verstärkungsmaterials (C), des Elastomers (D) und des Copolymers (E) mit einer funktionellen Gruppe, die mit einer Endgruppe des Polyamidharzes reagiert, 100 Masseteile beträgt.

2. Polyamidharzzusammensetzung zum Schaumformen nach Anspruch 1, wobei:
das kristalline Polyamidharz (A) Polyamid 6 ist; und
das nichtkristalline Polyamidharz (B) Polyamid 6I/6T ist.

3. Polyamidharzzusammensetzung zum Schaumformen nach Anspruch 1 oder 2, wobei:
das Elastomer (D) ein Säure-modifiziertes α-Olefin-basiertes (Co)polymer ist; und
das Copolymer (E) mit einer funktionellen Gruppe, die mit einer Endgruppe des Polyamidharzes reagiert, ein Glycidylgruppe-enthaltendes Styrol-basiertes Copolymer ist.

4. Polyamidharzzusammensetzung zum Schaumformen nach einem der Ansprüche 1 bis 3, wobei die Polyamidharzzusammensetzung eine Kristallisationstemperatur während eines Abkühlens auf weniger als 190°C aufweist und wobei die Kristallisationstemperatur wie in der Beschreibung definiert bestimmt wird.

5. Polyamidharzzusammensetzung zum Schaumformen nach einem der Ansprüche 1 bis 4,
wobei:
die Polyamidharzzusammensetzung eine Schmelzviskosität von 550 Pa·s oder mehr bei einer Scherrate von 60,8 sec⁻¹ bei einer Temperatur von 260°C aufweist; und
die Polyamidharzzusammensetzung eine Schmelzviskosität von 300 Pa·s oder weniger bei einer Scherrate von 608 sec⁻¹ bei einer Temperatur von 260°C aufweist.

6. Schaumformkörper, umfassend die Polyamidharzzusammensetzung zum Schaumformen nach einem der Ansprüche 1 bis 5 als eine konstituierende Komponente.

7. Schaumformkörper nach Anspruch 6, wobei:
der Schaumformkörper eine Sandwichstruktur aufweist, in der eine Schaumschicht, die eine kontinuierliche Harzphase und unabhängige Schaumzellen mit einem durchschnittlichen Zelldurchmesser von 10 bis 300 µm einschließt, und Nicht-Schaum-Hautschichten, die auf beiden Oberflächen der Schaumschicht bereitgestellt sind und jeweils eine Dicke von 200 bis 500 µm aufweisen, bereitgestellt sind,
wobei:
die kontinuierliche Harzphase der Schaumschicht und die Nicht-Schaum-Hautschicht aus der Polyamidharzzusammensetzung zum Schaumformen hergestellt sind; und
der Schaumformkörper einen Glanz von 80 oder mehr aufweist, gemessen von einer Seite der Nicht-Schaum-Hautschicht,
wobei der durchschnittliche Zelldurchmesser und der Glanz wie in der Beschreibung definiert bestimmt werden.

## Revendications

1. Composition de résine polyamide destinée au moulage de mousse, comprenant :
40 à 70 parties en masse de résine polyamide cristalline (A) ;
5 à 15 parties en masse de résine polyamide non cristalline (B) ;
15 à 50 parties en masse de matériau de renforcement inorganique (C) ;
0,1 à 10 parties en masse d'un élastomère (D) ; et
0,5 à 15 parties en masse d'un copolymère (E) ayant un groupe fonctionnel qui réagit avec un groupe terminal de la résine polyamide,
dans laquelle la quantité totale de résine polyamide cristalline (A), de la résine polyamide non cristalline (B), du matériau de renforcement inorganique (C), de l'élastomère (D) et du copolymère (E) ayant un groupe fonctionnel qui réagit avec un groupe terminal de la résine polyamide fait 100 parties en masse.

2. Composition de résine polyamide destinée au moulage de mousse selon la revendication 1, dans laquelle :
la résine polyamide cristalline (A) est un polyamide 6 ; et
la résine polyamide non cristalline (B) est un polyamide 6I/6T.

3. Composition de résine polyamide destinée au moulage de mousse selon la revendication 1 ou 2, dans laquelle :
l'élastomère (D) est un (co)polymère à base d'oléfine α modifié par un acide ; et
le copolymère (E) ayant un groupe fonctionnel qui réagit avec un groupe terminal de la résine polyamide est un copolymère à base de styrène contenant un groupe glycidyle.

4. Composition de résine polyamide destinée au moulage de mousse selon l'une quelconque des revendications 1 à 3, dans laquelle la composition de résine polyamide a une température de cristallisation lors du refroidissement inférieure à 190 °C, et dans laquelle la température de cristallisation est déterminée de la manière définie dans la description.

5. Composition de résine polyamide destinée au moulage de mousse selon l'une quelconque des revendications 1 à 4, dans laquelle :
la composition de résine polyamide a une viscosité à l'état fondu de 550 Pa.s ou plus à un taux de cisaillement de 60,8 sec⁻¹ et à une température de 260 °C ; et
la composition de résine polyamide a une viscosité à l'état fondu de 300 Pa.s ou moins à un taux de cisaillement de 608 sec⁻¹ et à une température de 260 °C.

6. Corps moulé en mousse comprenant une composition de résine polyamide destinée au moulage de mousse selon l'une quelconque des revendications 1 à 5, comme composant constituant.

7. Corps moulé en mousse selon la revendication 6, dans lequel :
le corps moulé en mousse présente une structure en sandwich dans laquelle une couche de mousse comprenant une phase de résine continue et des cellules de mousse indépendantes ayant un diamètre de cellule moyen allant de 10 à 300 µm, et des couches superficielles non mousse sur les deux surfaces de la couche de mousse et chacune ayant une épaisseur allant de 200 à 500 µm sont fourni, où :
la phase de résine continue de la couche de mousse et la couche superficielle non mousse sont composées de la composition de résine polyamide destinée au moulage de mousse ; et
le corps moulé en mousse a une brillance de 80 ou plus, mesurée depuis une face de la couche superficielle non mousse,
dans lequel le diamètre de cellule moyen et la brillance sont déterminés de la manière définie dans la description.
